# EUROPEAN PATENT APPLICATION

(11) **EP 3 971 617 A1**
(43) Date of publication of application: **23.03.2022**
(21) Application number: 20196869.0
(22) Date of filing: 18.09.2020
(51) Int. Cl.: G01S 19/48, G01C 21/20

(54) **MULTI-LEVEL ALTITUDE MAP MATCHING**

(71) Applicant: HERE Global B.V., 5611 ZT Eindhoven (NL)
(72) Inventor: NURMINEN, Henri Jaakko Julius, 33100 Tampere (FI); IVANOV, Pavel, 33100 Tampere (FI); WIROLA, Lauri Aarne Johannes, 33100 Tampere (FI)
(74) Representative: Cohausz & Florack

(57) **Abstract**

Inter-alia, a method is disclosed comprising: obtaining or gathering sample measurements, wherein one or more of the sample measurements are or comprise Global Navigation Satellite System, GNSS, available sample measurements, the one or more GNSS-available sample measurements respectively comprising information indicating that at least one GNSS signal is or was available at a respective location; matching, with a GNSS-availability altitude map, one or more of the GNSS-available sample measurements, wherein one or more of the respective locations are represented by the GNSS-availability altitude map; and based at least on the matching, determining or correcting altitude information respectively associated with one or more of the sample measurements. It is further disclosed an according apparatus, computer program and system.

## Description

### FIELD

The following disclosure relates to the field of positioning, or more particularly relates to systems, apparatuses, and methods for altitude map matching based at least in part on sample measurements.

### BACKGROUND

Setting up e.g. a crowd-sourcing based 3D radio network positioning system requires collecting measurements of the network characteristics, and the measurements need to be accurately georeferenced in 3D. That is, the coordinates of the position where the measurement was made have to be measured and estimated and transmitted to the crowd-sourcing server. The most straightforward technology for 3D georeferencing crowd-sourced data is GNSS positioning combined with sensor fusion algorithms based on sensor measurements from e.g. inertial sensors, magnetometers, and/or barometers.

However, this approach has shortcomings, and one of them is that GNSS altitudes are often inaccurate especially in densely built areas.

Additionally, 3D georeferencing of crowd-sourced data can utilize an altitude map that contains e.g. the level counts and level altitudes of multi-level areas (areas where people move in multiple altitude levels, e.g. multi-floor buildings, tunnels/bridges, multi-level streets). For example, the multi-level altitude map can be used to determine the altitude of a non-flying crowd-sourcing device that is in a known horizontal position, provided that the horizontal position has only one altitude level.

The process of refining a crowd-sourcing track's reference altitudes based on known horizontal locations and an altitude map is referred to as "altitude map matching".

When at least GNSS and barometer are used for the altitude map matching of a track, the altitude map matching made in one part of the track refines the altitude references of the whole track. This is so because the barometer measurements indicate altitude differences between different parts of the track.

A major limitation of such altitude map matching is that it can be applied reliably only when the track intersects with a single-level area. In sparsely populated areas and in smaller cities this is usually not a problem because almost any outdoor area has just one level (the ground level). In a typical location-related crowd-sourcing system, most crowd-sourced tracks contain outdoor parts, because if the georeferencing is based on GNSS, a crowd-sourced track benefits from containing some GNSS positions, which are mainly available outdoors.

In large cities, however, there may be large areas where there is no single-layer area in the vicinity. For example, many seemingly single-level streets may actually be multi-level areas because there are underground spaces such as public transport stations, parking facilities, underground shopping and dining areas, vehicle or pedestrian tunnels, multi-level streets. The altitude map matching cannot be done in a multi-level area, because it is not possible to determine which of the multiple levels the track should be assigned to. Especially when the length of the crowd-sourced tracks is limited, such large multi-level areas may produce a lot of data where the altitude map matching cannot be done. The track lengths are typically short because the crowd-sourcing cannot consume too much resources on a user device. This may for example slow down or prohibit the creation of a 3D radio network map that would not be necessary for a network positioning system.

### SUMMARY OF SOME EXEMPLARY EMBODIMENTS

However, it is a drawback that the altitude map matching is done only when part of the track is collected in areas which are assumed or estimated to be single-level areas.

It is thus, inter alia, an object of the invention to enable altitude map matching independent of the area where the crowd-sourcing data is collected.

According to a first exemplary aspect of the present invention, a method is disclosed, the method comprising:
- obtaining or gathering sample measurements, wherein one or more of the sample measurements are or comprise Global Navigation Satellite System, GNSS, available sample measurements, the one or more GNSS-available sample measurements respectively comprising information indicating that at least one GNSS signal is or was available at a respective location;
- matching, with a GNSS-availability altitude map, one or more of the GNSS-available sample measurements, wherein one or more of the respective locations are represented by the GNSS-availability altitude map; and
- based at least on the matching, determining or correcting altitude information respectively associated with one or more of the sample measurements.

This method may for instance be performed and/or controlled by an apparatus, for instance a server. Alternatively, this method may be performed and/or controlled by more than one apparatuses, for instance a server cloud comprising at least two servers. Alternatively, the method may for instance be performed and/or controlled by an electronic device, e.g. a mobile terminal. For instance, the method may be performed and/or controlled by using at least one processor of the electronic device.

According to a further exemplary aspect of the invention, a computer program is disclosed, the computer program when executed by a processor causing an apparatus, for instance a server, to perform and/or control the actions of the method according to the first exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the method according to the first exemplary aspect

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the first exemplary aspect

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a further exemplary aspect of the invention, a system is disclosed, comprising: a plurality (e.g. at least two) apparatuses according to any aspect of the invention as disclosed above, wherein the plurality of apparatus are configured to perform and/or control the method according to the first exemplary aspect together.

In the following, exemplary features and exemplary embodiments of all aspects will be described in further detail.

The sample measurements may or may comprise a plurality of data items. The sample measurements may for instance represent crowd-sourced data. A respective data item may be at least indicative of a location at which the data item was gathered. Such a plurality of data items may form a track of one (electronic) device. Alternative, the sample measurements may comprise a plurality of data items obtained by a plurality (e.g. at least two) electronic devices. The plurality of data items may then form a plurality (e.g. at least two) of tracks. A respective track may be gathered (e.g. measured) by one electronic device of the plurality of electronic devices.

The sample measurements may be gathered (e.g. measured). The sample measurements may be gathered by a respective electronic device in case the method according to the first exemplary aspect is performed and/or controlled by the respective electronic device. Alternatively, the sample measurements may be obtained, e.g. by receiving the sample measurements from a respective electronic device that has gathered the sample measurements. The sample measurements may be obtained, e.g. by retrieving the sample measurements from a memory. For instance, a respective electronic device that has gathered the sample measurements may upload or provide the sample measurements into the memory. Then, the sample measurements may be retrieved from this memory. The obtaining of the sample measurements may be done by an electronic device and/or a server or server cloud performing and/or controlling the method according to the first exemplary aspect.

One or more of the sample measurements are or comprise Global Navigation Satellite System, GNSS, available sample measurements. The one or more GNSS-available sample measurements respectively comprising information indicating that at least one GNSS signal is or was available at a respective location.

That at least one GNSS signal is or was available, as used herein, may be understood as follows: At least one GNSS signal is or was available if a GNSS receiver is able to resolve a position estimate based on the at least one GNSS signal. Typically, this may require detecting (e.g. radio) signals from more than one or multiple GNSS satellite, e.g. from at least four satellites. Thus, at a location where a respective sample measurement is gathered, at least one GNSS. signal is or was available within the meaning of this disclosure if at least one GNSS-based position estimate can be resolved. In particular, if one (e.g. radio) signal transmitted by a GNSS satellite is detected, but a position estimate cannot be resolved based on this signal, at least one GNSS signal is or was not available within the meaning of this disclosure.

Thus, an ability to resolve a position estimate may be used to infer indoors/outdoors status at a respective location at which a respective sample measurement is or was gathered, since an individual GNSS-based (e.g. radio) signal may be observable quite often even indoors, but one or more position estimates can be resolved rarely or never based on such an individual signal because the observable signal(s) from the respective GNSS satellites are few and/or too weak indoors.

For instance, in case at a given location at least one GNSS signal is observable (e.g. receivable) by the electronic device, the respective sample measurement that is gathered (e.g. measured) may be associated with information indicating that the at least one GNSS signal is or was available at the given location. In case at the given location such at least one GNSS signal is not observable, the respective sample measurement that is gathered by the respective electronic device may be associated with information indication that such at least one GNSS signal was not available at the given location.

In addition to the altitude information, the sample measurements preferably comprise additional information. For instance, the sample measurements may comprise information a horizontal position, e.g. a horizontal position estimate. For instance, the sample measurements may comprise measurements of signals allowing for determining a horizontal position, such as GNSS signals and/or signals of inertial sensors, such as a gyroscope and/or an accelerometer. The sample measurements may also comprise radio measurements (e.g. received signal strength measurements) of the radio environment, for instance of cellular signals, WiFi signals and/or Bluetooth signals. While radio measurements from the latter signals may generally also aid in the determination of a position, the necessary information for utilizing the radio measurements for positioning is typically not yet present in an early surveying phase of an area. The sample measurements may comprise fingerprints of signals of one or more radio nodes being observable at the respective location.

The area, in which the sample measurements were observed or taken, is at least in part (or completely) represented by an altitude map. The area may comprise outside and/or insides parts. The area, at least in one or more sub-areas, may in particular comprise multilevel structures, such as multistory buildings, bridges, tunnels, and multilevel roads. An altitude map may be understood to be a (e.g. two or three dimensional) digital representation of the area indicating altitude values for respective horizontal positions. The altitude map may be a topographic map. The altitude map may comprise (e.g. may be divided into) sub-sections representing respective (horizontal) sub-areas of the area. Each sub-section may represent a substantially rectangular sub-area of the area. The altitude map may comprise one or more altitude values for at least some (preferably each) of the sub-sections. Each sub-section may be realized by a data element at least comprising respective one or more altitude values. Thus, a respective sub-section (and thus a respective sub-area) is associated with respective one or more altitude values. For instance, the sub-sections of the map are defined such that the altitude in a respective sub-area represented by the sub-section of the map can be assumed to be constant. For example, the sub-sections may represent sub-areas with a length and/or width of not more than e.g. 20 meters, preferably not more than 10 meters.

The location may be an indoor or an outdoor location. Such an outdoor location may be an urban or a rural area. Such an indoor location may be a venue, e.g. a single or a multi-level area. The venue may be a shopping mall, public building, airport, station, fair, house, office building, or a combination thereof, to name but a few non-limiting examples. The venue may comprise indoor areas and/or outdoor areas. For instance, a shopping mall may comprise one or more terraces as outdoor area(s), and in addition one or more floors, shops as indoor area(s). At certain location of the indoor area(s), at least one GNSS signal mal not be observable. At the one or more outdoor area(s), at least one GNSS signal may be observable. There may also be area(s) of the venue that are located indoors, but still at least one GNSS signal is observable. For instance, a respective shopping mall may comprise an atrium, or have a glass roof, e.g. at least a part of the respective shopping mall. In such areas, there may be at least one GNSS signal observable so that when a respective electronic device gathers respective sample measurements, the GNSS available information may be determined (e.g. set) accordingly. Examples of outdoors locations respectively areas are e.g. streets, places, parks or the like, that may actually be multi-level areas because there may be underground spaces such as public transport stations, parking facilities, underground shopping and dining areas, vehicle or pedestrian. tunnels, multi-level streets.

One or more of the GNSS-available sample measurements may be matched with a GNSS-availability altitude map. Such a GNSS-availability map may for instance comprise pairs of a respective location associated with GNSS-available information, e.g. whether or not at the respective location at least one GNSS signal was observable, e.g. at the time the respective sample measurement was gathered. Further, such a GNSS availability map may comprise an identifier of a respective electronic device that gathered the respective sample measurement, altitude information, or a combination thereof, to name but a few non-limiting examples. The locations may be represented by the GNSS-availability altitude map. Further, the GNSS-availability altitude map may be part of a global GNSS availability altitude map. Such a GNSS availability altitude map may cover one or more indoor and/or outdoor locations respectively areas, e.g. venues, one or more areas, sections, streets, cities, states, or a combination thereof, to name but a few non-limiting examples.

The sample measurements may be matched with the GNSS availability altitude map, e.g. by obtaining (e.g. receiving or retrieving) the GNSS availability altitude map from a memory, e.g. comprised by or connectable to the apparatus performing and/or controlling the method according to the first exemplary aspect.

For instance, when the sample measurements are gathered (e.g. collection of respective crowd-sourcing data), the sample measurements may represent a plurality of locations that form a track. Then, for the respective location(s), a GNSS-available information may be determined accordingly. This may allow to label the parts of the track where at least one GNSS signal was observable during the gathering (e.g. measurement or collection) of the respective sample measurement.

When the matching (e.g. altitude map matching) is applied to such a new crowd-sourcing track represented by obtained or gathered sample measurement(s), e.g. the sample measurement(s) are matched to a GNSS availability altitude map. For instance, the matching may be based on the parts of the track where at least one GNSS signal was available. The matching may not be based on the parts of the track where at least one GNSS signal was not available.

An altitude map may include, for example, at least one absolute altitude value associated with location information, such as a horizontal position (e.g. latitude and longitude coordinates). In order to generate (e.g. build) such an altitude map, or to expand such an altitude map, altitude map learning may be used. Altitude map learning, as used herein, may be understood as providing one or more sample measurements comprising location information and at least one absolute altitude value and using such information to build and/or expand the altitude map with new information (thus, location(s) and absolute altitude value(s)) of the respective sample measurement(s). Also, existing association(s) between at least one location information and absolute altitude value(s) may be updated based on new information of the sample measurement(s). Such absolute altitude value(s) may be GNSS-based absolute altitude value(s).

Since when at least one GNSS signal was available, the respective location at which the sample measurement(s) was gathered can be determined quite accurately. Further, based on the at least one GNSS signal, a rough altitude estimation may be performed. When a new crowd-sourcing track represented by one or more sample measurements is applied to altitude map learning, the parts where at least one GNSS signal was observable (thus, GNSS was available) may be used. Parts of the track represented by the one or more sample measurements where at least one GNSS signal was not observable (thus, GNSS position estimate could not be resolved), may not be considered when the one or more sample measurements are applied to altitude map learning, since the altitude map may represent (e.g. only) the GNSS availability area. Parts of the track represented by the one or more sample measurements where at least one GNSS signal is or was not available may, thus, require additional information, e.g. gathered (e.g. measured) by one or more sensors of a respective electronic device that also gathered the one or more sample measurements (e.g. a part of the one or more sample measurements that are obtained in case the method according to the first exemplary aspect is performed and/or controlled by a server or server cloud).

When new sample measurements e.g. comprising or representing crowd-sourcing track(s) is (are) applied to the altitude map learning, (e.g. only) the parts where GNSS was available may be used.

In some cases, at least one GNSS signal is or was observable, thus GNSS still be available, although the respective location is indoors, e.g. such as in multiple floors e.g. of a respective venue. Many GNSS-availability locations and/or areas e.g. of a venue may likely not be mapped, because few or no people move within or on these locations and/or areas, e.g. such as many venue/building roofs, to name but one non-limiting example.

Based at least on the matching, determining or correcting altitude information respectively associated with one or more of the sample measurements may be enabled. As disclosed above, the determining or correcting of altitude information respective associated with one or more of the sample measurements may be done based on the sample measurements where at least one GNSS signal was available. Sample measurements gathered at location(s) where at least one GNSS signal was not available may be associated with altitude information based on e.g. one or more neighboring location e.g. for which altitude information are available. For instance, at first, sample measurement(s) that are direct neighboring location(s) of other locations at which at least one GNSS signal was available may be determined so that they can be associated with respective altitude information in the GNSS availability altitude map. Then, the next neighboring location(s) may be determined or corrected so that it (they) can also be associated with respective altitude information. Since the sample measurements may comprise altitude information not only gathered or determined based on at least one GNSS signal that was available, but also on e.g. barometer information gathered (e.g. measured) by one or more sensors (e.g. altitude sensors or barometers) comprised by or connectable to the respective electronic device that gathered the respective sample measurement(s), the altitude information of a certain location (e.g. within the GNSS availability altitude map) may be corrected respectively refined, wherein the respective sample measurements of location(s) where at least one GNSS signal is or was available are used for the altitude map learning.

This may allow learning and/or using of altitude map(s) that represents only the GNSS-availability space, i.e. the area and altitudes where satellite visibility suffices for computing GNSS position fixes. GNSS is typically available in places where open sky is visible in large enough solid angle.

Such a GNSS-availability altitude map may enable altitude map matching in many multi-level locations and/or areas where a large area is covered by underground spaces. The basis is that in many multi-level locations and/or areas GNSS is still available in only one level (in most cases in the top-most level, which may differ dependent on the location respectively area, in particular for venues). This may also be true in a street under which there is a metro station or a shopping area, for example. This may also be true for building where the roof or a part of it is accessible.

For instance, there may be a track that has a part where GNSS is available gathered at or within a building. The GNSS-availability altitude map may cover the outdoor areas and the building's roof and balcony, while the full multi-level altitude map would cover all the floors and the underground floor in addition, thus, indoor and outdoor areas of the building. The altitude map matching of the track may then be possible with the GNSS-availability altitude map. Matching with the full altitude map may not be possible since the whole track may be gathered in a multi-level venue/area. In contrast, matching with the GNSS availability altitude map may be possible, because the GNSS part of the track is in an area where GNSS was available in one level of the multi-level venue/area, i.e. the GNSS-availability map may be single-level (even though there is the underground level where GNSS is not available).

Example embodiments of all exemplary aspect may allow to check whether there are situations where at least one GNSS signal is or was available, and the respective electronic device of the track formed by at least a part of the sample measurements is not at the top level of a respective location/venue, such as when a glass roof, or glass walls are present, then there at least one GNSS signal can be available.

Further, at least one GNSS signal may be available at multi-level locations/venues, e.g. a shopping center with outdoor aisles, and inside shops, to name but one non-limiting example. Then, at least one GNSS signal can be available in such multi-level locations/venues. It may then be determined that "multi-level GNSS" is available, which may in example embodiments be comprised or represented by a respective sample measurement The term "multi-level GNSS" may be understood as GNSS being available in multiple levels e.g. of a venue.

There may be still locations/areas, like the aforementioned, where the (altitude map) matching may not yet be performable. By analyzing a plurality of sample measurements (e.g. data items), comparing relative altitude values of altitude information (e.g. derived from barometer sensor measurements of a respective electronic device), it may be determined if they match. Then, there may be locations/areas with (e.g. only) one level where GNSS is available thus, at least one GNSS signal is or was available. If, however, additional sample measurements (e.g. data items) that may be indicative of different altitude value(s) (e.g. based, at least in part, on barometer measurements (e.g. relative altitude value(s) and/or GNSS measurements and/or altitude map matching), the respective location(s)/area(s) may be labeled as "multi-level GNSS availability" being present. This may be represented by a flag comprised or associated with the respective sample measurement representing location(s) and/or area(s) in the altitude map. A respective multi-level venue (e.g. property) comprising the location(s) and/or area(s) may be determined (e.g. only) based on multiple sample measurements. Further, it may be at least one attribute of a location and/or area in the altitude map. Based on such a flag, it may be known that in the respective location(s)/area(s), altitude map matching may not be available.

A reference altitude value (e.g. reference level of a venue) may be set for the GNSS-available sample measurements. For instance, sample measurements forming a track of the location/area may be refined based on e.g. earlier gathered fingerprints which have been gathered where GNSS is or was available. From such altitude values that are/were determined/gathered where GNSS is or was available, one or more respective reference altitude values may be derived, which can be averaged out to set the reference altitude value respectively level. Then, the reference altitude value can be used to e.g. determine absolute altitude values for relative altitude values (e.g. gathered by a barometer).

A respective sample measurements (e.g. data item) may comprise altitude information, horizontal position, and GNSS-available flag. The matching may be based at least in part on those data samples. The respective altitude information may be GPS absolute altitude, which is very rough (∼10m or more accuracy) Such absolute altitude value(s) can be refined by the relative altitude values gathered (e.g. measured) by one or more sensors (e.g. barometers) of a respective electronic device (e.g. client device). Further, sensor fusion algorithms (e.g. Kalman filters, Particle filters, Rauch-Tung-Striebel smoothers, or a combination thereof), may be used to refine such absolute altitude value(s).

Such an electronic device (e.g. the electronic device according to the second exemplary aspect), as used herein, may for instance be portable (e.g. weigh less than 1, 0.9, 0.8, 0.7, 0.6, 0.5 kg, or less). The electronic device may for instance comprise or be connectable to a display for displaying information, e.g. a route that is guided/navigated to a user, to name but one non-limiting example. The electronic device may for instance comprise or be connectable to means for outputting sound, e.g. in the form of spoken commands or information. The electronic device may for instance comprise or be connectable to one or more sensors for determining the devices position, such as for instance a GNSS receiver, in the form of a GPS receiver. The electronic device may for instance comprise or be connectable to one or more sensors, e.g. in the form of an accelerometer and/or a gyroscope and/or magnetometer and/or barometer for gathering (e.g. measuring) altitude information. The accelerometer and/or the gyroscope may allow for determining a relative position of the electronic device with respect to an absolute position fix (e.g. reference position or absolute altitude value) from another positioning technology. The barometer may allow for determining the vertical position of the electronic device. The magnetometer may allow for determining a position fix based on a magnetic footprint of the electronic device, for instance. The electronic device may for instance comprise or be connectable to a receiver and/or a transmitter (e.g. a transceiver) for receiving and/or sending information.

According to an exemplary embodiment of the all exemplary aspects, the sample measurements are subsequent sample measurements, and wherein the one or more GNSS-available sample measurements are one or more subsequent GNSS-available sample measurements, the method further comprises:
- before obtaining or gathering the subsequent sample measurements that comprise the one or more subsequent GNSS-available sample measurements:
- obtaining or gathering one or more initial GNSS-available sample measurements respectively comprising information indicating that at least one GNSS signal is or was available at a respective location; and
- generating the GNSS-availability altitude map based at least on altitude information respectively associated with the one or more initial GNSS-available sample measurements.

The GNSS-availability altitude map used for correcting altitude information may be a previous altitude map, which for instance has been learned based on previously obtained or gathered sample measurements. For instance, the (previous) altitude map used for the correction is not yet updated with the altitude values matched based on the obtained sample measurements. For instance, the altitude information may be corrected with regard to the GNSS-available sample measurements respectively comprising information indicating that at least one GNSS signal is or was available at a respective location represented by the GNSS-availability altitude map, e.g. so that they align with altitude values indicated by the GNSS-availability altitude map. For instance, the obtained sample measurements may comprise altitude information of the track which may be corrected such that the track's altitude matches best with the GNSS-availability altitude map.

In case such a (previous) GNSS-availability altitude map is not present, a respective GNSS-availability altitude map may be generated. The GNSS-availability altitude map may be generated from scratch based at least in part on one or more initial GNSS-available sample measurements. The one or more initial GNSS-available sample measurements may be obtained or gathered, e.g. in the same fashion as disclosed above with regard to the one or more sample measurements. Of course, the sample measurements or one or more results of the matching may also be considered for the generation (e.g. creation) of the altitude map.

For instance, when obtaining (e.g. collecting) the sample measurements (e.g. crowd-sourcing data), the parts of a respective track represented by at least a part of the sample measurements where at least one GNSS signal was available during the gathering (e.g. measurement) may be labeled. It may be tested periodically, e.g. once a second, if at least one GNSS signal is available. GNSS is considered unavailable during a gap of pre-defined duration, e.g. an at least 5-second long gap, in the track represented by at least a part of the sample measurements (e.g. a GNSS position sequence).

Further, to each data item or measurement comprised or represented by the sample measurements, a flag may be added (e.g. incorporated or associated with the respective data item or measurement), wherein the flag indicates if at least one GNSS signal is or was available or not.

When the (altitude map) matching is applied to a new crowd-sourcing track represented by the one or more sample measurements, the matching may be based on the parts of the track where GNSS was available. Then, altitude map learning may be performed when the new crowd-sourcing track is applied, wherein the parts where at least one GNSS signal is or was available may be used.

The resulting GNSS-availability altitude map may be a multi-level altitude map. For instance, the method may also attempt to detect single-/multi-level venues and/or areas and perform the (altitude map) matching in the detected single-level GNSS-availability areas. Thus, in other levels where e.g. at least one GNSS signal was not available, the matching may not be performed. This may allow that the GNSS-availability altitude map will contain much more single-level area respectively space than a general altitude map because in many multi-level areas, GNSS is available in one level, only.

According to an exemplary embodiment of the all exemplary aspects, the method further comprises:
- updating the GNSS-availability altitude based at least on original altitude information that is respectively associated with one or more of the GNSS-available sample measurements.

According to an exemplary embodiment of the all exemplary aspects, the method further comprises:
- updating the GNSS-availability altitude map based at least on the determined or corrected altitude information that is respectively associated with one or more of the GNSS-available sample measurements.

The GNSS-availability altitude map can thus be advantageously updated with determined or corrected altitude information. Updating the GNSS-availability altitude map may in particular comprise associating the one (in case of a single level venue and/or area) or more (in case of a multilevel venue and/or area) determined altitude information with a certain location of the GNSS-availability altitude map. Due to the multiple altitude information for a certain location of the GNSS-availability altitude map, the GNSS-availability altitude map may also be considered a multi valued GNSS-availability altitude map.

When the (altitude map) matching is applied to the sample measurements (e.g. a new crowd-sourcing track), matching with the altitude map the parts of the track where GNSS is or was available is performed and/or controlled, but the whole track can be refined since altitude information (e.g. gathered by one or more sensors, e.g. a barometer) may reveal the altitude changes precisely.

According to an exemplary embodiment of the all exemplary aspects, the altitude information at least in part comprise relative altitude values indicative of an altitude change.

The altitude information may be indicative of an absolute value of an altitude. The absolute altitude information may for instance be determined by obtaining (e.g. receiving) or calculating from received signals an absolute altitude value. The absolute altitude information may for instance comprise at least one absolute altitude value associated with a vertical position such as an absolute height value (e.g. in meters or feet), above a reference height, such as the ground or the sea level. Satellite based altitude information is understood to be absolute altitude information which has been determined based on a satellite system. A satellite system is for example a Global Navigation Satellite System (GNSS) such as "Global Positioning System" (GPS), "Galileo", "Global Navigation Satellite System" (i.e. "Globalnaja Nawigazionnaja Sputnikowaja Sistema", GLONASS), "BeiDou Navigation Satellite System" (BDS), or "Quasi-Zenith Satellite System" (QZSS), to name some examples.

The altitude information may for instance be indicative of relative altitude value(s), such as altitude changes, i.e. altitude deltas. The relative altitude values may be obtained from one or more sensors of the electronic device gathering (e.g. observing) the sample measurements. The relative altitude value(s) may for instance be or be based on one or more pressure measurements (e.g. by a barometric sensor), which are indicative of an ambient pressure and an ambient pressure change. Such a relative altitude value is particularly advantageous for continuing determining altitude values (e.g. estimations) after a (e.g. direct) determining of the absolute altitude value(s) becomes unavailable or the absolute altitude value(s) becomes ambiguous, e.g. because the current position is an indoor area e.g. inside a venue (e.g. building) or inside other multi-layer locations respectively areas, to name but a few non-limiting examples.

The relative altitude values (e.g. based on barometer measurements) may be used to stabilize and filter altitude changes and may allow for extending an altitude value gathering also in location(s) and/or area(s) where no absolute altitude information (e.g. based on GNSS) is available, which is often the case for indoor venues and/or areas, as disclosed above. For instance, if (absolute) altitude value(s) is (are) known very accurately outside of a venue, altitude changes indoors can be estimated using the relative altitude value(s), e.g. from a barometer.

According to an exemplary embodiment of the all exemplary aspects, the matching further comprises:
- checking if the altitude map indicates that GNSS is or was available only in a single level of the area; and
- determining a mean and/or a weighted mean of a difference value based, at least in part, on the result of the checking, wherein the difference value represents an altitude difference between a respective altitude information of the sample measurements and a reference altitude value for a location as comprised by the altitude map.

When the sample measurements are obtained or gathered (e.g. new data items), the weight of the old data (e.g. altitude information) may be reduced so that the GNSS-availability altitude map will over time update automatically if the GNSS availability changes. Such changes may occur due to construction of new buildings, or construction to existing venues, to name but a few non-limiting examples. For instance, for determining the mean and/or weighted mean of the difference value, e.g. old sample counts/histogram bin heights of the GNSS-availability altitude map location (e.g. a certain grid point) may be multiplied with a number smaller than one, to name but one example. For example, if old sample counts are multiplied with 0.9 and a new sample arrives, the respective old samples respectively sample measurements will have weights at most of 0.9, and the new samples respectively sample measurements will have the weight of 1 when a weighted average of the samples' altitudes is determined (e.g. computed). Thus, the new one(s) will have higher weight(s) and the old sample weights will reduce over time when new samples arrive. This may allow to enable adapting to changes in the environment, e.g. construction of new buildings or the like, as disclosed above, to name but one non-limiting example.

According to an exemplary embodiment of the all exemplary aspects, the method further comprising:
- transforming the relative altitude values into absolute altitude values based, at least in part, on an absolute reference altitude value that is further comprised by at least one altitude information of the sample measurements and/or the determined mean and/or weighted mean of the difference value.

The respective absolute altitude value may be determined prior to the gathering or obtaining of the altitude information of the sample measurements, and/or being comprised by the sample measurements. The respective absolute altitude value may for instance be derived from a GNSS measurement, e.g. a position estimate

The absolute altitude information may be indicative of or represented by a value having an accuracy to the 10^{th} of m. Thus, it may be a rough value not accurate enough e.g. for indoor positioning. Since in location(s) where at least one GNSS signal was not available, a respective relative altitude value may be gathered, such relative altitude value(s) may be transformed into absolute altitude values. For instance, the last determined absolute altitude value may be used as a basis, and the altitude change as represented by the relative altitude value may be added or subtracted to transform the respective relative altitude value into an absolute altitude value.

According to an exemplary embodiment of the all exemplary aspects, the altitude map (e.g. the reference altitude value of the altitude map) is refined (e.g. updated) based, at least in part, on the determined mean and/or weighted mean difference value.

To compensate e.g. for measurement errors when gathering the sample measurements, the refining may be based on the determined mean and/or weighted mean difference value so that e.g. erroneous altitude information may not have significant impact on.the respective altitude values, as comprised by the GNSS-availability altitude map.

According to an exemplary embodiment of the all exemplary aspects, the GNSS availability information is represented by a flag incorporated or associated with a respective sample measurement of the sample measurements.

Such a flag may for instance be a binary value indicative of whether or not GNSS-availability is given, thus, whether during the gathering of the respective sample measurement at least one GNSS signal was available, as disclosed above.

According to an exemplary embodiment of the all exemplary aspects, the sample measurements at least in part form a track in the area.

The sample measurements may at least in part form a track e.g. in the venue and/or area. It will be understood that the sample measurements may be gathered by a plurality (e.g. at least two) of electronic devices. Such a track may represent the respective sample measurements from one of the plurality of electronic devices. The sample measurements may thus comprise a plurality (e.g. at least two) of tracks. That the sample measurements may form at least in part a track in the venue and/or area (and thus in the GNSS-availability altitude map) may be understood to mean that positions described by the position information (e.g. altitude information and/or horizontal position information) comprised by the sample measurements form a track. The track may be a substantially continuous track. Thus, the sample measurements may not only be observed sporadically. Rather they are observed substantially continuously. For instance, a sample measurement may be taken at least once per minute, preferably at least once per 10 seconds, or once per second. The track may thus intersect at least one a part of the GNSS-availability altitude map e.g. associated with the location (e.g. venue and/or area). If the track intersects a sub-section of the map, at least one sample measurement may have been observed in the respective sub-area associated with the sub-section (and thus at least one altitude estimate may be determined for the sub-section).

Further, for instance, the sample measurements at least in part comprise or represent a device identifier (e.g. identifier associated with a respective electronic device, or a track-specific identifier such that (e.g. all) sample measurements associated with an identifier are known to originate from the same electronic device) enabling to associate one or more of the sample measurements with a respective electronic device that gathered the respective sample measurements.

According to an exemplary embodiment of the all exemplary aspects, matching is further based on the sample measurements that at least in part form the track in the area, and for which the GNSS availability information represents that at least one GNSS signal is or was available.

Thus, for such part(s) of the track where the GNSS-availability information represents that at least one GNSS signal is or was not available, the respective altitude values can be refined based, at least in part, on the determined difference value derived from the relative altitude values.

Further, e.g. for the generating of the GNSS-availability altitude map or the refining of the whole track represented by the sample measurements is enabled because the relative altitude information (e.g. gathered by at least one barometer) may reveal the altitude change(s) which can be utilized accordingly.

For instance, it may be looped over the respective sample measurements (e.g. data items) which have the GNSS available flag set. Then, the respective sample measurement (e.g. data item) may be inserted to the altitude map learning procedure. For instance, a respective venue and/or area (e.g. may even be the globe) may be divided into a regular horizontal grid, and each grid point is assigned with a histogram of altitude measurements. The new data item's altitude value may be inserted to the altitude histogram of the corresponding grid points. If the histogram of a grid point has enough sample measurements associated with it, a clustering method with cluster count estimation may be performed. The optimal cluster count may be e.g. a cluster count that minimizes e.g. an Akaike information criterion or a Bayesian information criterion. Thus, one or both criteria may be used as a basis for the cluster count estimation. If the clustering method detects one cluster (i.e. there are probably data from one level only), the respective altitude map value of the grid point may be computed based at least in part on the histogram (e.g. sample mean value). Optionally, also the sample variance of the histogram may be computed. This may be repeated for the whole sample measurements.

According to an exemplary embodiment of the all exemplary aspects, the method further comprising:
- determining a GNSS availability prediction information based, at least in part, on the GNSS-availability altitude map.

Based on the GNSS availability altitude map, the GNSS availability prediction information may be determined. The GNSS availability prediction information may be indicative of whether it can be expected at a certain location that at least one GNSS signal is available. For instance, it may be predicted a route a user of an electronic device may take. This may be based at least in part on historic information indicative of movements and/or routes a user has taken in the past, to name but one non-limiting example.

The user may request such a determining of a respective GNSS availability prediction information. Also, in case the method is performed and/or controlled by the electronic device, the determining may be done on part of the electronic device. In this way, it may for instance be enabled to switch to other position methods from a previously utilized satellite based positioning technology in venues and/or areas, where it can be expected that at least one GNSS signal is not available.

The GNSS availability prediction information may be comprised or associated with the altitude map. By providing the GNSS availability prediction information (e.g. via the altitude map) to a respective electronic device, the electronic device is enabled to e.g. turn into a power saving mode by turning GNSS sensor on only in case the GNSS availability prediction information is indicative of at least one GNSS signal being available at a location where the respective electronic device is currently located. In this way, e.g. battery consumption of the respective electronic device can be reduced or minimized, at least in regard to the GNSS sensor.

The learned GNSS-availability altitude map can also be used be used by to predict GNSS-availability in a known location. This can be useful and minimize the battery consumption for example when a mobile client device is doing network-based or sensor fusion-based positioning. For instance, the positioning algorithm can check if GNSS is predicted to be available, i.e. if the GNSS receiver should be switched on for improving the positioning accuracy.

According to an exemplary embodiment of the all exemplary aspects, the method further comprising:
- providing (e.g. outputting) or triggering to provide the GNSS-availability prediction information to one or more electronic devices.

In case the GNSS-availability prediction information is requested to be determined, the method may be performed and/or controlled by a server or server cloud, e.g. a positioning server. The determined GNSS-availability prediction information may be provided, e.g. by sending the GNSS-availability prediction information to the respective electronic device that has requested the determining of the GNSS-availability prediction information.

For instance, a respective electronic device may download the GNSS-availability altitude map or parts of it. This may be done once per venue and/or area. Additionally or alternatively, this may be done occasionally because the GNSS-availability altitude map need to be updated frequently for achieving accurate results.

It may further be checked if the GNSS-availability altitude map indicates that at least one GNSS signal is available in the respective location(s) (e.g. estimated by methods other than pure GNSS (e.g. network positioning or sensor fusion). If the electronic device (e.g. client device) has a 3D position estimate, it may return "GNSS is available" if and only if the GNSS-availability altitude map has at least one altitude value for the device's horizontal position and an altitude value is close enough to the device's own altitude estimate. Alternatively, it may return "GNSS is available" if the electronic device's altitude is equal to or higher than the altitude of the GNSS-availability altitude map's lowest altitude value in the venue and/or area. This may for instance be the case if a location has an open sky.

If the electronic device (e.g. client device) has a 2D position estimate, it may return "GNSS is available" if and only if the GNSS-availability altitude map has altitude estimate(s) for the electronic device's horizontal position (in the 2D case the risk of false available detection is higher because the GNSS may be available e.g. on a building's roof but not inside the building, to name but one non-limiting example).

According to an exemplary embodiment of the all exemplary aspects, the method further comprising:
- providing a result of the determining whether or not a position estimate is indoors or outdoors to one or more electronic devices.

Moreover, the GNSS-availability altitude map can be used to check if a position is outdoors or indoors. Do the GNSS availability check of the previous paragraph and interpret the "GNSS is available" result as an indication that the device is outdoors.

For instance, the providing may be performed and/or controlled based on a request received prior to the determining from a respective electronic device. Further, the GNSS-availability altitude map can be used to determine if ambiguity is present or not. For instance, the GNSS-availability altitude map may be used to determine if GNSS is available in multiple levels in a (e.g. single) horizontal location (e.g. floors of a building, or multiple levels of a multi-level road). If GNSS is available in multiple levels, ambiguity may be present since it cannot be determined if the respective electronic device is at the top most level of the respective horizontal position. This may be provided as additional information to an electronic device enabling that e.g. the level at which the electronic device may be located may not be determinable with a high chance of being correct.

This may allow that highly precise altitude referencing of sample measurements (e.g. crowd-sourced data) is enabled even in dense urban environments where there are a lot of underground spaces, for example. Minimal additional information are required to the sample measurements - the GNSS available information. The GNSS-availability altitude map can be used for multiple purposes, some of them as disclosed above.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of a system according to an exemplary aspect;
- Fig. 2: a flowchart showing an example embodiment of a method according to the first exemplary aspect;
- Fig. 3: a schematic illustration of a multi-level altitude map as utilized by example embodiments according to all exemplary aspects;
- Fig. 4: a schematic illustration of altitude map matching as utilized by example embodiments according to all exemplary aspects; and
- Fig. 5: a schematic block diagram of an apparatus according to an exemplary aspect.

### DETAILED DESCRIPTION OF SOME EXEMPLARY EMBODIMENTS

The following description serves to deepen the understanding and shall be understood to complement and be read together with the description as provided in the above summary section of this specification.

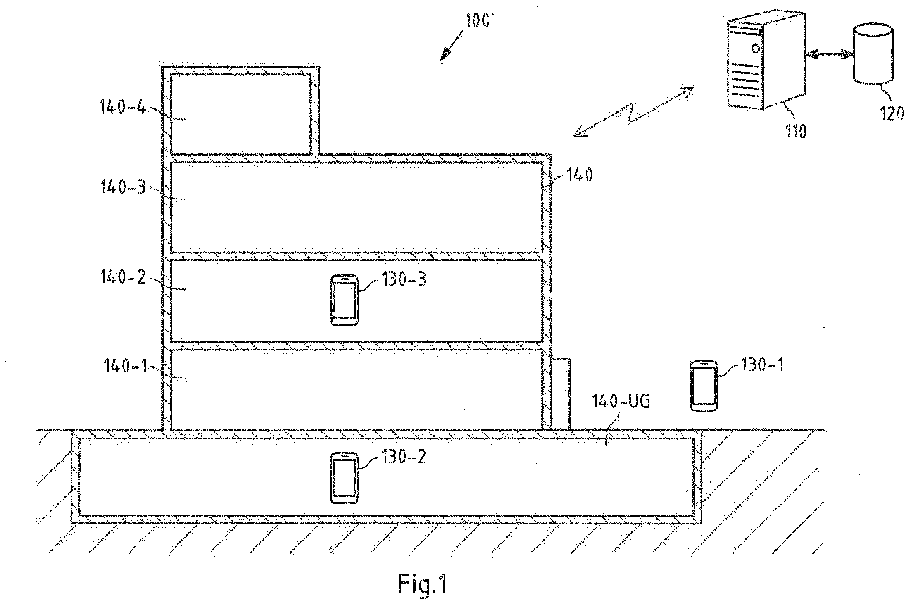

Fig. 1 is a schematic high-level block diagram of an example embodiment of a system according to exemplary aspects.

System 100 comprises a server 110, which may also be embodied as a server cloud comprising a plurality of servers providing one or more services at least partially jointly. System 100 optionally comprises a database 120 for storing information, e.g. one or more initial GNSS-available sample measurements, one or more GNSS-availability altitude maps, one or more sample measurements, one or more relative altitude values, one or more absolute altitude values, one or more pieces of altitude information, one or more pieces of GNSS-availability prediction information, or a combination thereof, to name but a few non-limiting examples. Database 120 may be comprised by server 110, e.g. together forming one single entity, or database 120 may be connectable to the server 110.

System 100 comprises one or more electronic devices, wherein three example electronic devices 130-1, 130-2, and 130-3 are shown. The electronic devices may be client devices (e.g. User Equipment, UE) System 100 comprises a venue 140, wherein a GNSS-availability altitude map for the venue 140 may be utilized by example embodiments according to all exemplary aspects. The venue 140 is divided into several levels, e.g. underground level 140-UG, first level 140-1, second level 140-2, third level 140-3 and fourth level 140-4. The three example electronic devices 130-1, 130-2, 130-3 are located throughout the venue, wherein electronic device 130-1 is located outdoors, e.g. on an open area or balcony, or place of the venue 140, the electronic device 130-2 is located indoors in the underground level 140-UG of the venue, and the electronic device 130-3 is located indoors in the second level 140-2 of the venue 140. Venue 140 may be a shopping mall or office building, to name but a few non-limiting examples.

To enable communication between the electronic devices 130-1, 130-2, and/or 130-3, and the server 110, a communication network (not shown in Fig. 1) optionally comprised by the system 100 may be used. The communication network may be a cellular (e.g. according to 3G/4G/5G/New Radio or future communication standard), and/or a non-cellular communication network, such as a satellite-based communication network or the Internet, to name but a few non-limiting examples. The communication may be wireless as is illustrated in Fig. 1 by the double arrow pointing between the electronic devices 130-1, 130-2, and/or 130-3 and the server 110. It will be understood that further communication to one or more other entities e.g. not comprised by the system 100 and/or not shown in Fig. 1 is possible via the communication network 150.

System 100 may provide a general architecture enabling to perform and/or control example embodiments of all exemplary aspect.

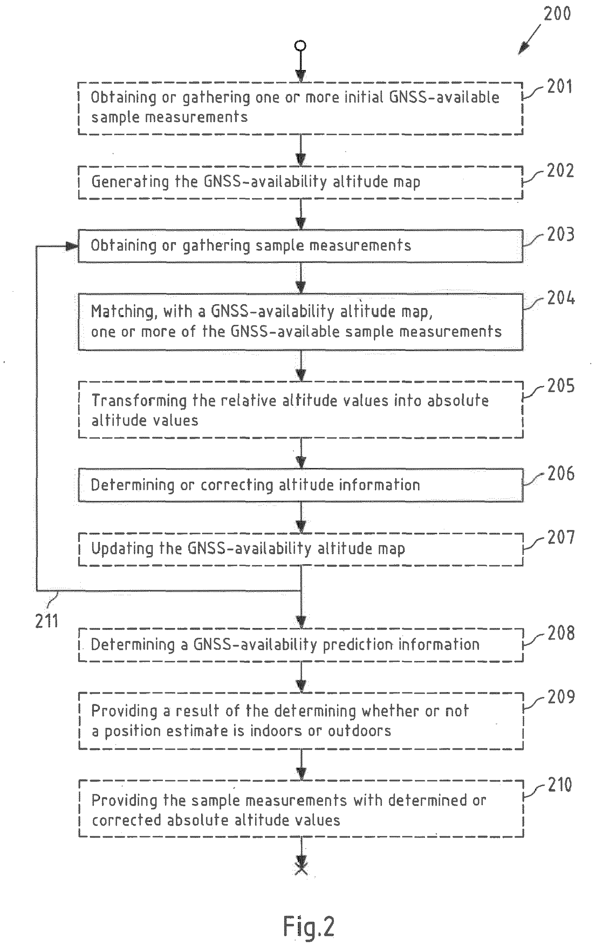

Fig. 2 is a flowchart 200 showing an example embodiment of a method according to the first exemplary aspect. This flowchart 200 may for instance be performed by a server or server cloud, e.g. server 110 of Fig. 1, and/or an electronic device, e.g. one of the electronic devices 130-1, 130-2, 130-3 of Fig. 1.

In an optional first step 201, one or more initial GNSS-available sample measurements are obtained (in case of the server performing and/or controlling the flowchart 200) or gathered (in case the flowchart 200 is performed and/or controlled by the electronic device). Such initial GNSS-available sample measurements are used to generate a GNSS-availability altitude map, see optional step 202. After the GNSS-availability altitude map is generated, the GNSS-availability altitude map may be provided to a memory, e.g. database 120 of Fig. 1, where it can be stored for future usage, utilizing it in example embodiments according to all exemplary aspects.

The generating of the GNSS-availability altitude map may utilize a large number of initial GNSS-available sample measurements, so that it may be preferred to be performed and/or controlled by a positioning server. Alternatively, it may be performed and/or controlled by a client device that gathers a plurality of sample measurements (e.g. data items for one or more venues).

For instance, the sample measurements may form one or more tracks that are input to a crowd-sourcing system. The electronic device (e.g. client) that gathered the sample measurements may thus provide the respective altitude values. Such a positioning server may utilize the sample measurements, e.g. by learning where e.g. radio nodes are located in case the respective sample measurements comprise such additional information.

In a third step 203, one or more sample measurements are gathered or obtained. The one or more sample measurements are or comprise GNSS-available sample measurements respectively comprising information indicating whether at least one GNSS signal is or was available at a respective location. In step 203, the respective sample measurement(s) may still contain or comprise one or more sample measurement(s) where GNSS was not available. The sample measurements may be obtained in case of the server performing and/or controlling the flowchart 200. The sample measurements may be gathered (e.g. measured, observed) in case the flowchart 200 is performed and/or controlled by the electronic device.

In a fourth step 204, one or more of the GNSS-available sample measurements are matched with a GNSS-availability altitude map, e.g. the GNSS-availability altitude map generated in optional step 202.

Additionally or alternatively, the matching may be done with a GNSS-availability altitude map retrieved from a memory (e.g. database 120 of Fig. 1).

In an optional fifth step 205, relative altitude values may be transformed into absolute altitude values. The sample measurements may comprise such altitude information. Absolute altitude values may be comprised by respective sample measurements in case at last one signal is or was available during the gathering (e.g. measuring, observing) of the respective sample measurements. In case such at least one GNSS signal is or was not available during the gathering of the respective sample measurements, relative altitude values, e.g. gathered (e.g. measured) by a barometric sensor may be comprised by the respective sample measurements. Also, both absolute and relative altitude values may be comprised by a respective sample measurements, e.g. being a part of altitude information comprised or represented by at least a part of the respective sample measurement

In a sixth step 206, altitude information are determined or corrected based at least on the matching (step 204). The determination and/or correction may be applied to GNSS-available and/or the non-GNSS-available sample measurement(s) of the one or more sample measurement(s) obtained or gathered in step 203. The altitude information may be associated with one or more of the sample measurements. In locations where at least one GNSS signal is or was not available during the gathering of the respective sample measurements, erroneous altitude values may be corrected. In case a respective sample measurement does not comprise an altitude value (e.g. comprised by the altitude information), a respective altitude value may be determined, according to example embodiments of all exemplary aspects.

In an optional seventh step 207, the GNSS-availability altitude map may be updated, based at least on the determined or corrected altitude information of step 206.

In case new sample measurements are obtained or gathered, the flowchart may be repeated, e.g. as indicated by the arrow 211 pointing back to the step 203 of obtaining or gathering sample measurements.

In an optional eighth step 208, a GNSS-availability prediction information may be determined, based at least on the GNSS-availability altitude map. For instance, a positioning server may obtain (e.g. receive) a request and then forward the request to the apparatus performing and/or controlling the flowchart 200. Of course, also such a positioning server may perform and/or control the flowchart 200. Then, e.g. based on a current location of the requesting device, the GNSS-availability prediction information may be determined to e.g. enable the requesting client device when to expect that at least one GNSS signal is not available. This may allow the respective electronic device e.g. to reduce power consumption by turning of the respective GNSS receiver, to name but one non-limiting example.

Also, based at least on such a GNSS-availability altitude map, it may be determined whether or not a position estimate is indoors or outdoors.

In an optional ninth step 209, the result of the determining of whether a position estimate is indoors or outdoors may be provided (e.g. sent) to the respective electronic device and/or positioning server that may have requested such a determining.

In an optional tenth step 210, the sample measurements with determined or corrected absolute altitude values are provided. The sample measurements with determined or corrected absolute altitude values may be provided by sending them to one or more respective electronic devices and/or a positioning server that may have requested the provision. The recipient may utilize the determined or corrected absolute altitude values, e.g. in location-based services, to name but one non-limiting example. For instance, in addition to the altitude map, the method according to example embodiments may allow to output the corrected altitude value(s). The altitude correction enables precise 2D and/or 3D-georeferencing of the sample measurements (e.g. data), which in turn enables e.g. learning of 2D and/or 3D radio maps for radio network based positioning, to name but one further and non-limiting example.

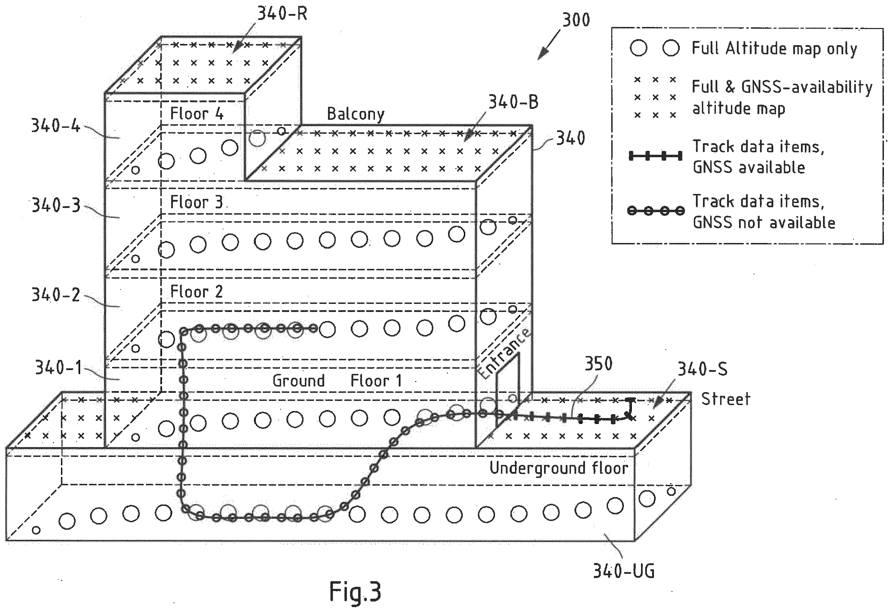

Fig. 3 is a schematic illustration of a multi-level altitude map as utilized by example embodiments according to all exemplary aspects.

In the example of Fig. 3, there is a building 340 with four overground floors 340-1 to 340-4 and one underground floor 340-UG that extends outside the (overground) footprint of the building. These are marked by 340-S (Street) extending on the left hand side and the right hand side of the building 340. Also the building 340 has a roof level 340-R, and a balcony level 340-B on top of the third level 340-3. There is also a track 350 that has a part where GNSS is available (see legend marking where GNSS is or was available, and where at least one GNSS signal is or was not available during the respective gathering of the sample measurements forming the track 350). The GNSS-availability altitude map associated with the building 340 covers the outdoor areas 340-S, and the building's roof 340-R and balcony 340-B, while the full multi-level altitude map of the building 340 would cover all the floors 340-1 to 340-4 and the underground floor 340-UG in addition. The altitude map matching of the example track 350 is possible with the GNSS-availability altitude map, in contrast to the altitude map not comprising information with regard to whether or not at least one GNSS signal is or was available. The matching with the full altitude map may not be possible because the whole track 350 is in a multi-level area. Matching with the GNSS availability altitude map is possible because the GNSS part of the track 350 is in an area where GNSS is available in one level only, i.e. the GNSS-availability map is single-level (even though there is the underground level where GNSS is not available).

This may allow to learn of an altitude map that represents only the GNSS-available space.

Relative altitude values, e.g. gathered by a barometer or barometric sensor of a respective electronic device measuring ambient air pressure, based on that altitude changes can be measured. This may allow to correct altitude information (e.g. altitude values) in locations or areas based on other locations or areas where the correct altitude value is present.

The track 350 formed by one or more sample measurements comprises one or more horizontal positions, one or more relative altitude values (e.g. comprised by altitude information) and one or more GNSS-available sample measurements indicating that at least one GNSS-signal is or was available at a respective location.

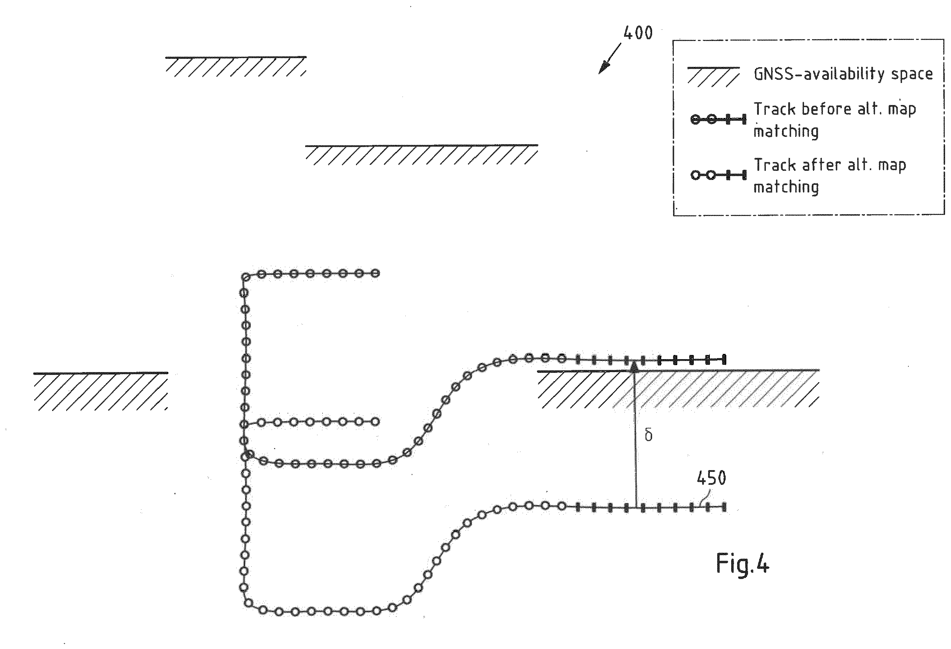

Fig. 4 is a schematic illustration of altitude map matching as utilized by example embodiments according to all exemplary aspects.

In particular, Fig. 4 illustrates the altitude map matching for the example scenario of Fig. 3.

Learning and using of altitude map that represents only the GNSS-availability space, i.e. the area and altitudes where satellite visibility suffices, for computing GNSS position fixes is enabled. GNSS is typically available in places where open sky is visible in large enough solid angle.

The GNSS-availability altitude map enables altitude map matching in many multi-level areas where a large area is covered by underground spaces. The basis is that in many multi-level areas GNSS is still available in only one level (in most cases in the top-most level). This may be true in a street under which there is a metro station or a shopping area, for example. This may also be true for building where the roof is accessible.

This may be done by the following phases as comprised by example embodiments of all exemplary aspects:
1) when collection (e.g. gathering) the crowd-sourcing data (e.g. the sample measurements), (e.g. by information indicating that at least one GNSS signal is or was available) the parts of the track 450 (e.g. formed by the sample measurements) where the GNSS was available during the measurement may be labeled;
2) when altitude map matching is applied to a new crowd-sourcing track, the matching may be done only based on the parts of the track 450 where GNSS was available but the whole track 450 may be refined because barometer reveals the altitude changes precisely);
3) when a new crowd-sourcing track (e.g. track 450) is applied to the altitude map learning, only the parts where GNSS was available may be used.

With regard to item 1):
   a. For example, it may be tested once a second if GNSS is available. GNSS is considered unavailable during an at least 5-second long gap in the GNSS position sequence.
   b. For example, it may be added to each data item (e.g. sample measurement) or measurement a flag that indicates if GNSS was available or not.
With regard to item 2):
   a. it may be looped over the data items which have the GNSS available flag set. For each data item, an altitude map matching method may be applied as follows:
      i. if the altitude map indicates that GNSS is available only in a single level in the horizontal location of the data item, it may be added the difference from the new data item's altitude to the altitude map altitude to a list Δ;
      ii. it may be determined (e.g. computed) the mean δ of the altitudes in Δ, or a weighted mean where the weight are proportional e.g. to the inverted variances of the new track's reference altitudes and/or to the inverted sample variances of the altitude measurements that are the basis for the altitude map in the area (also see item 3)a.i below).
   b. it may be added δ to each data item's altitude reference. This may be done even for the data items where the GNSS available flag is not set
With regard to item 3):
   a. it may be looped over the data items which have the GNSS available flag set:
      i. it may be inserted the data item to the altitude map learning. Example details: the globe may be divided into regular horizontal grid, and each grid point may be assigned to a histogram of altitude measurements. The new data item's altitude may be inserted to the altitude histogram of the corresponding grid points. If the histogram of a grid point has enough samples and if a clustering method with cluster count estimation detects only one cluster (i.e. there are probably data from one level only), the altitude map value of the grid point may be computed based on the histogram (e.g. sample mean). Optionally, also the sample variance of the histogram may be computed to be used in item 2)a.ii above.

The resulting GNSS-availability altitude map can also be a multi-level altitude map, i.e. the method according to the first exemplary aspect attempts to the detect the single-/multi-level locations and/or areas and perform the altitude map matching only in the detected single-level GNSS-availability areas. This may allow that the GNSS-availability altitude map contains much more single-level locations and/or areas than a general altitude map because in many multi-level areas GNSS is available in only one level.

When new data (e.g. sample measurements) is (are) received, the weight of the old data can be reduced so that the GNSS-availability altitude map will over time update automatically if the GNSS availability changes e.g. due to construction of new buildings. For example,
the old sample counts/histogram bin heights of the altitude map grid point may be multiplied with a number smaller than one.

The learned GNSS-availability altitude map can also be used be used by to predict GNSS-availability in known location(s) and/or area(s). This can be useful and minimize the battery consumption for example when a mobile client device is doing network-based or sensor fusion-based positioning: the positioning algorithm can check if GNSS is predicted to be available, i.e. if the GNSS receiver should be switched on for improving the positioning accuracy.
1) download the altitude map or parts of it to the mobile client device. this is done only once per area or occasionally because the altitude map need to be updated frequently.
2) check if the GNSS-availability altitude map indicates that GNSS is available in the location (estimated by methods other than pure GNSS (e.g. network positioning or sensor fusion):
   a. if the client device has a 3D position estimate, a flag indicating "GNSS is available" may be returned if and only if the GNSS-availability altitude map has at least one altitude estimate for the device's horizontal position and an altitude is close enough to the device's own altitude estimate. Alternatively, a flag indicating "GNSS is available" may be returned if the device altitude is equal to or higher than the altitude map's lowest altitude in the area (if an altitude has an open sky, probably higher altitudes also have).
   b. if the client device has only a 2D position estimate, a flag indicating "GNSS is available" may be returned if and only if the GNSS-availability altitude map has altitude estimate for the device's horizontal position (in the 2D case the risk of false available detection may be higher because the GNSS may be available e.g. on a building's roof, but not inside the building).

Moreover, the GNSS-availability altitude map may be used to check if a position is outdoors or indoors. The GNSS availability check as disclosed above may be performed and/or controlled, and may be interpreted that the "GNSS is available" results as an indication that the device is outdoors.

In this way, it is enabled to achieve highly precise altitude referencing of crowd-sourced data even in dense urban environments where there are a lot of underground spaces. Minimal additional information are required to the crowd-sourcing data (only the GNSS availability labels). The GNSS-availability altitude map can be used for multiple purposes.

In some cases GNSS may still be available in multiple floors, e.g. shopping malls with glass roof and atrium. Many GNSS-availability areas will likely not be mapped because few or no people move within these areas, e.g. many building roofs.

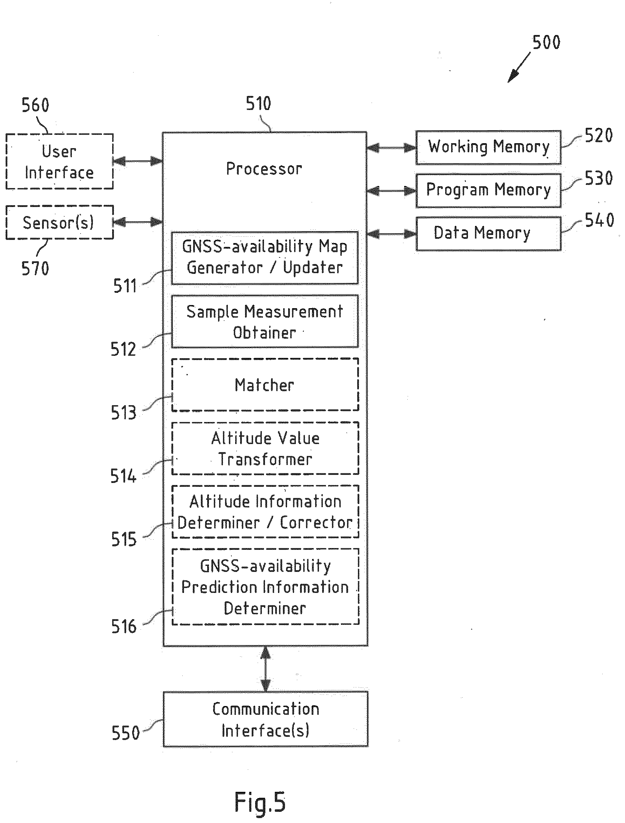

Fig. 5 is a schematic block diagram of an apparatus 500 according to an exemplary aspect, which may for instance represent the electronic device 130-1, 130-2, or 130-3 of Fig. 1. Alternatively, the schematic block diagram of the apparatus 500 according to an exemplary aspect may for instance represent server 110 of Fig. 1.

Apparatus 500 comprises a processor 510, working memory 520, program memory 530, data memory 540, communication interface(s) 550, an optional user interface 560 and an optional sensor(s) 570.

Apparatus 500 may for instance be configured to perform and/or control or comprise respective means (at least one of 510 to 570) for performing and/or controlling the method according to the first exemplary aspect. Apparatus 500 may as well constitute an apparatus comprising at least one processor (510) and at least one memory (520) including computer program code, the at least one memory and the computer program code configured to, with the at least one processor, cause an apparatus, e.g. apparatus 500 at least to perform and/or control the method according to the first exemplary aspect.

Processor 510 may for instance comprise an optional GNSS-availability (altitude) map generator/updater 511 as a functional and/or structural unit. GNSS-availability map generator/updater 511 may for instance be configured to generate and/or update a GNSS-availability map (see steps 202 and/or 207 of Fig. 2).

Processor 510 may for instance comprise a sample measurement obtainer/gatherer 512 as a functional and/or structural unit. Sample measurement obtainer/gatherer 512 may for instance be configured to obtain and/or gather one or more (e.g. initial) sample measurements (see steps 201 and/or 203 of Fig. 2).

Processor 510 may for instance comprise a matcher 513 as a functional and/or structural unit. Matcher 513 may for instance be configured to match one or more GNSS-available sample measurements with a GNSS-availability altitude map and/or update a GNSS-availability map (see step 204 of Fig. 2).

Processor 510 may for instance comprise an optional altitude value transformer 514 as a functional and/or structural unit Altitude value transformer 514 may for instance be configured to transform a relative altitude value into an absolute altitude value, or vice versa (see step 205 of Fig. 2).

Processor 510 may for instance comprise an altitude information determiner/corrector 515 as a functional and/or structural unit. Altitude information determiner/corrector 515 may for instance be configured to determine and/or correct altitude information respectively associated with one or more of the sample measurements (see step 206 of Fig. 2).

Processor 510 may for instance comprise an optional GNSS-availability prediction information determiner 516 as a functional and/or structural unit. GNSS-availability prediction information determiner 516 may for instance be configured to determine GNSS-availability prediction information (see step 208 of Fig. 2).

Processor 510 may for instance further control the memories 520 to 540, the communication interface(s) 550, the optional user interface 560 and the optional sensor(s) 570.

Processor 510 may for instance execute computer program code stored in program memory 530, which may for instance represent a computer readable storage medium comprising program code that, when executed by processor 510, causes the processor 510 to perform the method according to the first exemplary aspect

Processor 510 (and also any other processor mentioned in this specification) may be a processor of any suitable type. Processor 510 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 510 may for instance be an application processor that runs an operating system.

Program memory 530 may also be included into processor 510. This memory may for instance be fixedly connected to processor 510, or be at least partially removable from processor 510, for instance in the form of a memory card or stick. Program memory 530 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 530 may also comprise an operating system for processor 510. Program memory 530 may also comprise a firmware for apparatus 500.

Apparatus 500 comprises a working memory 520, for instance in the form of a volatile memory. It may for instance be a Random Access Memory (RAM) or Dynamic RAM (DRAM), to give but a few non-limiting examples. It may for instance be used by processor 510 when executing an operating system and/or computer program.

Data memory 540 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 540 may for instance store one or more initial GNSS-available sample measurements, one or more GNSS-availability altitude maps, one or more sample measurements, one or more relative altitude values, one or more absolute altitude values, one or more pieces of altitude information, one or more pieces of GNSS-availability prediction information, or a combination thereof, to name but a few non-limiting examples.

Communication interface(s) 550 enable apparatus 500 to communicate with other entities, e.g. with server 110 of Fig. 1 and/or the electronic devices 130-1, 130-2, 130-3 of Fig. 1, dependent upon whether apparatus represents server 110 of Fig.1 or one of the electronic devices 130-1, 130-2, 130-3 of Fig. 1. The communication interface(s) 550 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 500 to communicate with other entities, e.g. not shown in Fig. 1

User interface 560 is optional and may comprise a display for displaying information to a user and/or an input device (e.g. a keyboard, keypad, touchpad, mouse, etc.) for receiving information from a user.

Sensor(s) 570 are optional and may for instance comprise a barometric sensor, e.g. to gather altitude information, e.g. at least indicative of an altitude change, also referred to as relative altitude value. Such altitude information may represent a change of altitude, e.g. gathered (e.g. measured) based on a comparison of a previous gathered altitude value to a new gathered altitude value.

Some or all of the components of the apparatus 500 may for instance be connected via a bus. Some or all of the components of the apparatus 500 may for instance be combined into one or more modules.

The following embodiments shall also be considered to be disclosed:
Embodiment 1:
   An apparatus comprising at least one processor and at least one memory including computer program code, the at least one memory and the computer program code configured to, with the at least one processor, cause an apparatus at least to perform:
   - obtaining or gathering sample measurements, wherein one or more of the sample measurements are or comprise Global Navigation Satellite System, GNSS, available sample measurements, the one or more GNSS-available sample measurements respectively comprising information indicating that at least one GNSS signal is or was available at a respective location;
   - matching, with a GNSS-availability altitude map, one or more of the GNSS-available sample measurements, wherein one or more of the respective locations are represented by the GNSS-availability altitude map; and
   - based at least on the matching, determining or correcting altitude information respectively associated with one or more of the sample measurements.
Embodiment 2:
   The apparatus according to embodiment 1, wherein the sample measurements are subsequent sample measurements, and wherein the one or more GNSS-available sample measurements are one or more subsequent GNSS-available sample measurements, the at least one memory and the computer program code configured to, with the at least one processor, cause the apparatus further to perform:
   - before obtaining or gathering the subsequent sample measurements that comprise the one or more subsequent GNSS-available sample measurements:
   - obtaining or gathering one or more initial GNSS-available sample measurements respectively comprising information indicating that at least one GNSS signal is or was available at a respective location; and
   - generating the GNSS-availability altitude map based at least on altitude information respectively associated with the one or more initial GNSS-available sample measurements.
Embodiment 3:
   The apparatus according to embodiment 1 or embodiment 2, the at least one memory and the computer program code configured to, with the at least one processor, cause the apparatus further to perform:
   - updating the GNSS-availability altitude based at least on original altitude information that is respectively associated with one or more of the GNSS-available sample measurements.
Embodiment 4:
   The apparatus according to any of the preceding embodiments, the at least one memory and the computer program code configured to, with the at least one processor, cause the apparatus further to perform:
   - updating the GNSS-availability altitude map based at least on the determined or corrected altitude information that is respectively associated with one or more of the GNSS-available sample measurements.
Embodiment 5:
   The apparatus according to any of the preceding embodiments, wherein the altitude information at least in part comprise relative altitude values indicative of an altitude change.
Embodiment 6:
   The apparatus according to any of the preceding embodiments, wherein the matching further comprises:
   - checking if the altitude map indicates that GNSS is or was available only in a single level of the area; and
   - determining a mean and/or a weighted mean of a difference value based, at least in part, on the result of the checking, wherein the difference value represents an altitude difference between a respective altitude information of the sample measurements and a reference altitude value for a location as comprised by the altitude map.
Embodiment 7:
   The apparatus according to embodiment 6, the at least one memory and the computer program code configured to, with the at least one processor, cause the apparatus further to perform:
   - transforming the relative altitude values into absolute altitude values based, at least in part, on an absolute reference altitude value that is further comprised by at least one altitude information of the sample measurements and/or the determined mean and/or weighted mean of the difference value.
Embodiment 8:
   The apparatus according to embodiment 6 or embodiment 7, wherein the altitude map is refined based, at least in part, on the determined mean and/or weighted mean difference value.
Embodiment 9:
   The apparatus according to any of the preceding embodiments, wherein the GNSS availability information is represented by a flag incorporated or associated with a respective sample measurement of the sample measurements.
Embodiment 10:
   The apparatus according to any of the preceding embodiments, wherein the sample measurements at least in part form a track in the area.
Embodiment 11:
   The apparatus according to embodiment 10, wherein the matching is further based on the sample measurements that at least in part form the track in the area, and for which the GNSS availability information represents that at least one GNSS signal is or was available.
Embodiment 12:
   The apparatus according to any of the preceding embodiments, the at least one memory and the computer program code configured to, with the at least one processor, cause the apparatus further to perform:
   - determining a GNSS-availability prediction information based, at least in part, on the GNSS-availability altitude map.
Embodiment 13:
   The apparatus according to any of the preceding embodiments, the at least one memory and the computer program code configured to, with the at least one processor, cause the apparatus further to perform:
   - providing a result of the determining whether or not a position estimate is indoors or outdoors to one or more electronic devices.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. A method, performed by at least one apparatus, comprising:
- obtaining or gathering sample measurements, wherein one or more of the sample measurements are or comprise Global Navigation Satellite System, GNSS, available sample measurements, the one or more GNSS-available sample measurements respectively comprising information indicating that at least one GNSS signal is or was available at a respective location;
- matching, with a GNSS-availability altitude map, one or more of the GNSS-available sample measurements, wherein one or more of the respective locations are represented by the GNSS-availability altitude map; and
- based at least on the matching, determining or correcting altitude information respectively associated with one or more of the sample measurements.

2. The method according to claim 1, wherein the sample measurements are subsequent sample measurements, and wherein the one or more GNSS-available sample measurements are one or more subsequent GNSS-available sample measurements, the method further comprising:
- before obtaining or gathering the subsequent sample measurements that comprise the one or more subsequent GNSS-available sample measurements:
- obtaining or gathering one or more initial GNSS-available sample measurements respectively comprising information indicating that at least one GNSS signal is or was available at a respective location; and
- generating the GNSS-availability altitude map based at least on altitude information respectively associated with the one or more initial GNSS-available sample measurements.

3. The method according to claim 1 or claim 2, further comprising:
- updating the GNSS-availability altitude based at least on original altitude information that is respectively associated with one or more of the GNSS-available sample measurements.

4. The method according to any of the preceding claims, further comprising:
- updating the GNSS-availability altitude map based at least on the determined or corrected altitude information that is respectively associated with one or more of the GNSS-available sample measurements.

5. The method according to any of the preceding claims, wherein the altitude information at least in part comprise relative altitude values indicative of an altitude change.

6. The method according to any of the preceding claims, wherein the matching further comprises:
- checking if the altitude map indicates that GNSS is or was available only in a single level of the area; and
- determining a mean and/or a weighted mean of a difference value based, at least in part, on the result of the checking, wherein the difference value represents an altitude difference between a respective altitude information of the sample measurements and a reference altitude value for a location as comprised by the altitude map.

7. The method according to claim 6, further comprising:
- transforming the relative altitude values into absolute altitude values based, at least in part, on an absolute reference altitude value that is further comprised by at least one altitude information of the sample measurements and/or the determined mean and/or weighted mean of the difference value.

8. The method according to claim 6 or claim 7, wherein the altitude map is refined based, at least in part, on the determined mean and/or weighted mean difference value.

9. The method according to any of the preceding claims, wherein the GNSS availability information is represented by a flag incorporated or associated with a respective sample measurement of the sample measurements.

10. The method according to any of the preceding claims, wherein the sample measurements at least in part form a track in the area.

11. The method according to claim 10, wherein the matching is further based on the sample measurements that at least in part form the track in the area, and for which the GNSS availability information represents that at least one GNSS signal is or was available.

12. The method according to any of the preceding claims, further comprising:
- determining a GNSS-availability prediction information based, at least in part, on the GNSS-availability altitude map.

13. The method according to any of the preceding claims, further comprising:
- providing a result of the determining whether or not a position estimate is indoors or outdoors to one or more electronic devices.

14. An apparatus configured to perform and/or control or comprising respective means for performing and/or controlling the method of any of the claims 1 to 13.

15. A tangible computer-readable medium storing computer program code, the computer program code when executed by a processor causing an apparatus to perform and/or control the method of any of the claims 1 to 13.
